# EUROPEAN PATENT APPLICATION

(11) **EP 4 751 942 A1**
(43) Date of publication of application: **03.06.2026**
(21) Application number: 24216505.8
(22) Date of filing: 29.11.2024
(51) Int. Cl.: B60G 3/20, B60G 7/00

(54) **SUSPENSION COMPONENT AND METHOD TO MANUFACTURE THE COMPONENT**

(71) Applicant: Volvo Car Corporation, 405 31 Göteborg (SE)
(72) Inventor: SKAGIUS, Adam, 40531 Göteborg (SE); WEGLIN, Joakim, 40531 Göteborg (SE); NORDELL, Magnus, 40531 Göteborg (SE)
(74) Representative: Kransell & Wennborg KB

(57) **Abstract**

The disclosure relates to a component (22) for a vehicle chassis. The component (22) comprises a first connection portion (28) pivotably attachable to a vehicle structure or another chassis component. Moreover, the component (22) comprises a second connection portion (30) pivotably attachable to a vehicle structure or another chassis component. Furthermore, the component (22) comprises a body portion (32) structurally interconnecting the first connection portion (28) and the second connection portion (30). A wheel bearing interface (26) for connecting a wheel bearing part is provided on the body portion (32). The body portion (32) comprises a hollow (34) having a depth extension larger than a largest diameter of the hollow (34) and being undercut-free along a straight direction extending in parallel to the depth extension. The disclosure further relates to a suspension system for a road wheel of a vehicle comprising the component (22). Finally, the disclosure is directed to a core (60) for manufacturing a component (22) for a vehicle chassis, to a use of the core (60) for manufacturing a component (22) for a vehicle chassis and to a method for manufacturing a component (22) for a vehicle chassis.

## Description

### TECHNICAL FIELD

The present disclosure relates to a component for a vehicle chassis.

The present disclosure also relates to a suspension system for a road wheel of a vehicle.

Moreover, the present disclosure relates to a core for manufacturing a component for a vehicle chassis.

Furthermore, the present disclosure relates to a use of a core for manufacturing a component for a vehicle chassis and to a method for manufacturing a component for a vehicle chassis.

### BACKGROUND ART

Components of a vehicle chassis add weight to an overall weight of a vehicle. An increased overall weight of the vehicle may involve undesired influences on a driving performance of the vehicle. Moreover, an increased overall weight of the vehicle may increase an energy consumption of the vehicle while driving.

If the component of the vehicle chassis forms part of an unsprung mass, i.e. it is not supported by a spring and/or damper, a high weight of such a component may cause a rather low level of driving comfort for a user of the vehicle. This may involve a rather low performance in attenuating or dampening vibrations and other types of harshness while driving.

### SUMMARY

Hence, there may be a need to reduce the weight of a component for a vehicle chassis. This applies in particular to components forming part of an unsprung mass.

The problem is at least partially solved or alleviated by the subject matter of the independent claims of the present disclosure, wherein further examples are incorporated in the dependent claims.

According to a first aspect, there is provided a component for a vehicle chassis. The component comprises:
- a first connection portion pivotably attachable to a vehicle structure or another chassis component,
- a second connection portion pivotably attachable to a vehicle structure or another chassis component, and
- a body portion structurally interconnecting the first connection portion and the second connection portion, wherein a wheel bearing interface for connecting a wheel bearing part is provided on the body portion.
The body portion comprises a hollow having a depth extension larger than a largest diameter of the hollow and being undercut-free along a straight direction extending in parallel to the depth extension.

The vehicle chassis is understood as a structural component or system of the vehicle providing support for the wheels on a body of the vehicle. The component for a vehicle chassis is to be understood as a component which may form part of the vehicle chassis. Thus, the component for a vehicle chassis may be either directly or indirectly connected to other components for a vehicle chassis or components of the body of the vehicle, e.g. via suspension rods or link arms. The first connection portion of the component being pivotably attachable to a vehicle structure or another chassis component means that the first connection portion may not be fixedly, i.e. immovably, attached to the vehicle structure or the other chassis component. In particular, "pivotably attachable" may be realized using an attachment via a hinge. The hinge may allow one rotational degree of freedom, two rotational degrees of freedom and/or a translational degree of freedom. Moreover, "pivotably attachable" may be realized using an attachment via a movable j oint. The joint may allow up to three rotational degrees of freedom. Moreover, the joint may also allow a translational degree of freedom, particularly due to a possibility of a joint bearing of the joint to deform under load. Concerning the second connection portion being pivotably attachable to a vehicle structure or another chassis component, the same considerations concerning the term "pivotably attachable" as described with regard to the first connection portion also apply to the second connection portion. It is understood that the vehicle structure and/or the other chassis component that the second connection portion is attachable to may be the same or a different vehicle structure and/or the same or a different other chassis component than the first connection portion is attachable to. The body portion structurally interconnecting the first connection portion and the second connection portion is to be understood in that the body portion is interposed between the first connection portion and the second connection portion in a load-bearing manner. This implies that substantial loads, i.e. forces and torques, acting between the first connection portion, the second connection portion and/or the wheel bearing interface may be carried by the body portion. Within this context, the term "substantial loads" refers to a level of loads that a person skilled in the art would reasonably expect to occur while the vehicle, which may particularly be an automobile, e.g. a car, is driving in a standard driving environment such as in an inner city or on a highway. The wheel bearing interface that the body portion comprises is to be understood as an interface to which a road wheel of the vehicle can be rotatably attached. A road wheel of the vehicle may be rotatably attached to the body portion via the wheel bearing part. Typically, the wheel bearing part comprises a roller bearing.

The component for a vehicle chassis according to the first aspect of the present disclosure may as well be called a knuckle configure for carrying a road wheel of the vehicle.

The body portion comprising a hollow means that the body portion comprises a cavity. This has the effect that a weight of the component is reduced, wherein at the same time, the relevant mechanical stability indicators may stay the same. Thus, an overall weight of the vehicle may be reduced. If the component forms part of the unsprung mass, the unsprung mass of the vehicle is reduced. A reduced unsprung mass in turn enhances user comfort, e.g. in terms of vibrations and other types of harshness that a user of the vehicle experiences while driving the vehicle. The hollow having a depth extension larger than the largest diameter of the hollow means that an aspect ratio between the depth extension and the largest diameter of the hollow is greater than one. The depth extension may be measured from an opening of the hollow to an end of the hollow that is located at the furthest distance from the opening. In an example, the depth extension may be measured from a center point of the opening of the hollow. In another example, the depth extension may be measured in parallel to an inner wall of the hollow. The largest diameter of the hollow may be understood to be measured perpendicularly to the depth extension. The largest diameter of the hollow may comprise at least one point of an edge that defines the opening of the hollow. In this context, the depth extension may be understood as a depth axis extending through the hollow. The hollow being undercut-free along a straight direction extending in parallel to the depth extension means that there is no point on the inner wall of the hollow that is located further away from the depth axis than a corresponding point on the largest diameter of the hollow. If the depth axis is protected radially outwards from a middle portion of the hollow onto the inner wall of the hollow in any radial direction, points on a projection line of the depth axis on the inner wall are understood as corresponding points. In a direction seen from the opening of the hollow to the end of the hollow, a first one of the corresponding points is located at a distance further away from the depth axis than a second one of the corresponding points. Alternatively, the first one of the corresponding points is at least located at the same distance from the depth axis as the second one of the corresponding points. In simple terms, undercut-free means that a solid and indeformable core having a shape that fills out the hollow can be inserted into and/or removed from the hollow without breaking the core and/or the component for a vehicle chassis. This has the effect that a manufacturability of the component is facilitated, especially if the component is manufactured by casting. Altogether, the component according to the present disclosure is lightweight, mechanically stable and easy to manufacture.

In an example, the body portion comprises a curved section. The hollow at least partially extends into the curved section. Another term for this curved section may be "goose neck" or "swan neck". If the wheel bearing part is connected to the body portion and a road wheel of the vehicle is rotatably attached to the wheel bearing interface via the wheel bearing part, the curved section of the body portion has the effect that one of the first connection portion and the second connection portion may be arranged inside an inner circumference of a tire of the road wheel. Inside of an inner circumference of the tire of the road wheel is understood in terms of a radial direction and in terms of an axial direction of the road wheel. At the same time, the respectively other one of the first connection portion and the second connection portion may be arranged outside an outer circumference of the tire of the road wheel. Outside of an outer circumference of the tire of the road wheel is understood as outside in the radial direction of the road wheel. Due to the curved section, the body portion can go around the tire. Such an arrangement of the first connection portion and the second connection portion facilitates an attachment of the component for a vehicle chassis to a vehicle structure or another chassis component. Moreover, such an arrangement enables an efficient actuation of the component for it to be rotated around a rotational axis that is substantially perpendicular to a rotational axis of a road wheel attachable to the wheel bearing part, which is connectable to the wheel bearing interface of the body portion of the component. This may be of particular importance if said road wheel is a steered wheel, particularly a front wheel, of the vehicle. Thus, the curved section enables an efficient rotation of the component for a vehicle chassis if attached to a vehicle structure or another chassis component in order to steer a road wheel attachable to the component via the wheel bearing part. The hollow extending at least partially into the curved section means that the curved section is not entirely made up of a solid and/or a bulk material. Instead, the curved section is partly hollow. The hollow extending into a curved section of the component has the effect that the weight of the component is further reduced, thereby further reducing an overall vehicle weight and enhancing user comfort.

In an example, the hollow is narrowing along the depth extension towards a bottom of the hollow. The bottom of the hollow comprises the end of the hollow. Referring back to the explanation of the feature described above that the hollow is undercut-free, the hollow narrowing along the depth direction towards the bottom of the hollow means that on the projection of the depth axis on the inner wall of the hollow, there is at least one point that is located closer to the depth axis than the point that lies both on the projection and on the edge that defines the opening of the hollow. This excludes that the entire hollow is cylinder-shaped. A cylinder comprises sharp edges at its ends. Instead, the hollow is generally of a tapered shape. Due to this, there are no sharp edges in the hollow, particularly not at the bottom of the hollow. However, this does not exclude that certain areas of the inner wall of the hollow extend in parallel to the depth axis. The hollow narrowing along the depth extension towards a bottom of the hollow has the effect that stress concentrations due to loads applied to the component for a vehicle chassis are reduced to a minimum, particularly at the bottom of the hollow due to an absence of sharp edges in the hollow.

In an example, at least a portion of the walls delimiting the hollow is inclined by 0.5° to 15° with respect to the depth extension. In other words, at least a portion of the inner walls of the hollow is inclined by 0.5° to 15° with respect to the depth axis. Other portions of the inner wall of the hollow may extend in parallel to the depth axis. In an example, all portions of the inner walls of the hollow are inclined by 0.5° to 15° with respect to the depth axis. In an example in which a portion of the inner walls of the hollow is inclined with respect to the depth axis, an angle of inclination may be 1° to 7°. One may refer to such an angle of inclination as a draft angle. The draft angle has the effect that a core that may be used for manufacturing the hollow, particularly if the component for a vehicle chassis is a cast component, may easily be removed from the hollow at an end of a manufacturing process. In particular, the core may be retracted from the hollow in a retraction direction without a need to destroy the core and/or the component. Moreover, the core may be removed from the hollow without cooling the core or heating up the component. This ensures a simple and reliable manufacturing process.

In an example, at least a portion of the walls delimiting the hollow is at least one of convex, concave and flat. At least a portion of the walls delimiting the hollow being concave means that an inclination of at least a portion of the inner wall of the hollow with respect to the depth axis increases along the depth extension in a direction from the opening of the hollow towards the bottom and/or towards the end of the hollow. This means that the value of the angle of inclination increases on that portion of the inner wall in a direction from the opening of the hollow towards the bottom and/or towards the end of the hollow. This has the effect that the overall tapered shape of the hollow can be realized, allowing an efficient manufacturing process by removing a core from the component for a vehicle chassis, especially a core used for casting the component. At least a portion of the walls delimiting the hollow being convex means that the inclination of at least a portion of the inner wall of the hollow with respect to the depth axis decreases along the depth extension or direction from the opening of the hollow towards the bottom and/or towards the end of the hollow. This means that the value of the angle of inclination decreases on that portion of the inner wall in a direction from the opening of the hollow towards the bottom and/or towards the end of the hollow. This allows more design freedom in the shape of the hollow. In particular, it may be possible to shape the hollow in a way that the shape of the hollow follows an outer shape of the component in a substantially parallel manner. This way, a substantially constant wall thickness of the component may be realized even in regions of the body portion of the component into which the hollow extends. The substantially constant wall thickness of the component may especially be realized by a concave portion of the inner wall of the hollow in a region of the curved section of the body portion. A substantially constant wall thickness sustains a capability of the component to bear substantial loads, i.e. forces and torques, between the first connection portion, the second connection portion and/or the wheel bearing interface while driving the vehicle. A portion of the walls delimiting the hollow being flat facilitates manufacturing of the component since manufacturing flat portion of walls is comparatively easy. Moreover, the flat portion may as well be used to shape the hollow in a way that the shape of the hollow follows an outer shape of the component in a substantially parallel manner. As has been explained before, a substantially constant wall thickness may be realized in doing so.

In an example, the hollow is accessible via a singular opening only. Put otherwise, the hollow only comprises one access from an environment. The opening or access may be provided at one side. All other sides of the hollow are closed by solid material of the body portion. This ensures a sufficient level of strength and stiffness of the body portion to bear loads that occur while driving. While being stiff and strong, the component is still comparatively light due to the hollow that extends inside the body portion.

In an example, the singular opening is oriented towards the wheel bearing interface and/or towards the second connection portion. In other words, the hollow opens towards the wheel bearing interface and/or the second connection portion. If the component for the vehicle chassis is used in a vehicle for carrying a road wheel of the vehicle while driving, the wheel bearing interface is typically closer to a surface of a road on which the vehicle is traveling than the first connection portion. Moreover, in the same use case, the second connection portion is typically closer to the surface of the road on which the vehicle is traveling than the wheel bearing interface. Thus, still in the same use case, the singular opening is oriented towards the surface of the road on which the vehicle is traveling. If water, dirt and/or other debris from the surface of the road on which the vehicle is traveling is tossed into the hollow due to a spinning movement of a road wheel attachable to the body part via the wheel bearing part, moisture, dirt and/or the other debris will eventually leave the hollow only from the influence of gravity without further cleaning action. This ensures that the component does not corrode due to moisture ingress. Moreover, due the described orientation of the singular opening of the hollow and a consequential reduced accumulation of water dirt and other debris in the hollow, the component maintains its reduced mass compared to a component that has its shape completely filled out by solid material or compared to a component that has a singular opening of its hollow oriented towards the first connection portion.

In an example, the hollow is arranged between the first connection portion and the wheel bearing interface. The portion of the component between the first connection portion and the wheel bearing interface typically accounts for a significant portion of an overall weight of the component. Thus, the hollow being arranged between the first connection portion and the wheel bearing interface significantly reduces the overall weight of the component.

According to a second aspect, there is provided a suspension system for a road wheel of a vehicle. The suspension system comprises:
- the component according to the first aspect,
- a first link arm pivotably connected to the first connection portion of the component,
- a second link arm pivotably connected to the second connection portion of the component, and
- a wheel bearing part connected to the wheel bearing interface.

By using link arms, the first connection portion and the second connection portion of the component for a vehicle chassis may be reliably connected to a vehicle structure, e.g. vehicle body, or another chassis component of the vehicle. "Pivotably connected" may in particular be realized by an attachment via a hinge. The hinge may allow one rotational degree of freedom, two rotational degrees of freedom and/or a translational degree of freedom. Moreover, "pivotably connected" may be realized by an attachment via a joint. The joint may allow up to three rotational degrees of freedom. Moreover, the joint may also allow a translational degree of freedom, particularly due to a possibility of a joint bearing of the joint to deform under load. A road wheel of the vehicle may be rotatably attached to a body portion of the component via the wheel bearing part that is connected to the wheel bearing interface. Typically, the wheel bearing part comprises a roller bearing. Providing such as suspension system has the effect that an overall weight of the suspension system is reduced due to the hollow in the component according to the first aspect. Thus, also an overall weight of the vehicle is reduced. If the component forms part of the unsprung mass, the unsprung mass of the vehicle is reduced. This in turn enhances user comfort, e. g. in terms of vibrations and other types of harshness that the user experiences while driving the vehicle.

According to a third aspect, there is provided a core for manufacturing a component for a vehicle chassis according to the first aspect. The core comprises a core body extending along a straight retraction direction. The extension of the core body along the retraction direction is larger than a width of the core body measured perpendicularly to the retraction direction. Moreover, the core body is undercut-free along the retraction direction.

The core having an extension along the retraction direction that is larger than the width of the core body means that an aspect ratio between the extension of the core along the retraction direction and the largest diameter of the core perpendicular to the retraction direction is greater than one. The extension along the retraction direction may be measured from a first end of the core body, which comprises a point on a circumference of the largest diameter of the core, to a second end of the core that is located at the furthest distance from the first end. In an example, the extension along the retraction direction may be measured from a center point of the first end of the core body. In another example, the extension along the retraction direction may be measured in parallel to an outer surface of the core body. The width of the hollow comprises at least one point of an edge that defines the first end of the core. The extension of the core body along the retraction direction may be understood as an extension axis extending through the core body. The core body being undercut-free along the retraction direction means that there is no point on the outer surface of the core that is located further away from the extension axis than a corresponding point on the largest diameter of the core body. If the extension axis is protected radially outwards from a middle portion of the core body onto the outer surface of the core body in any radial direction, points on a projection line of the extension axis on the outer surface are understood as corresponding points. In a direction seen from the first end of the core body to the second end of the core body, a first one of the corresponding points is located at a distance further away from the extension axis than a second one of the corresponding points. Alternatively, the first one of the corresponding points is at least located at the same distance from the extension axis as the second one of the corresponding points. In simple terms, undercut-free means that if the core is used for manufacturing a hollow of the component, in particular a hollow of a cast component, and the core fills out the hollow during manufacturing, the core can be removed, in other words retracted, along the straight retraction direction from the hollow without having to break the core and/or the component for a vehicle chassis. This has the effect that a manufacturability of the component is facilitated, especially if the component is manufactured by casting. A further effect of a core that can be removed with ease is that the core may be reusable.

In an example, the core body is narrowing along the retraction direction. More precisely, the core body is narrowing from its first end to its second end. Referring back to the explanation of the feature described above that the core is undercut-free, the core body narrowing along the retraction direction means that on the projection of the extension axis onto the outer surface of the core, there is at least one point that is located closer to the extension axis than the point that lies both on the projection and on the edge that defines the first end of the core. This excludes that the entire core is cylinder-shaped. A cylinder comprises sharp edges at its ends. Instead, the core is generally of a tapered shape. Due to this, there is no sharp edge on the core body, particularly not at the second end of the core. However, this does not exclude that certain areas of the outer surface of the core body extend in parallel to the extension axis. The core narrowing along the retraction direction towards the second end of the core has the effect that stress concentrations in a hollow of the component, which was manufactured using the core, due to loads applied to the component for a vehicle chassis that comprises the hollow are reduced to a minimum, particularly at a bottom of the hollow due to an absence of sharp edges in the hollow.

In an example, at least a portion of the walls delimiting the core body are inclined by 0.5° to 15° with respect to the retraction direction. In other words, at least a portion of the outer surface of the core is inclined by 0.5° to 15° with respect to the extension axis. Other portions of the inner wall of the hollow may extend in parallel to the extension axis. In an example, all portions of the outer surface of the core are inclined by 0.5° to 15° with respect to the extension axis. In an example in which a portion of the outer surface of the core is inclined with respect to the extension axis, an angle of inclination may be 1° to 7°. One may refer to such an angle of inclination as a draft angle. The draft angle has the effect that the core, if used for manufacturing a hollow in a component, particularly a hollow in a cast component, may easily be removed from the hollow at an end of a manufacturing process. In particular, the core may be retracted from the hollow in the retraction direction without a need to destroy the core and/or the component. Moreover, the core may be removed from the hollow without cooling the core or heating up the component. This ensures a simple and reliable manufacturing process.

In an example, at least a portion of the walls delimiting the core body is at least one of convex, concave and flat. At least a portion of the walls delimiting the core body being concave means that an inclination of at least a portion of the outer surface of the core with respect to the extension axis decreases along the retraction direction in a direction from the first end of the core body towards the second end of the core body. This means that the value of the angle of inclination decreases on that portion of the outer surface of the core body in a direction from the first end of the core body towards the second end of the core body. This has the effect of that the overall tapered shape of the core can be realized, allowing an efficient manufacturing process by removing the core from a hollow of the component for a vehicle chassis, especially if the component is a cast component. At least a portion of the walls delimiting the core body being convex means that the inclination of at least a portion of the outer surface of the core with respect to the extension axis increases along the retraction direction from the first end of the core towards the second end of the core. This means that the value of the angle of inclination increases on that portion of the outer surface of the core in a direction from the first end of the core body towards the second end of the core body. This allows more design freedom in the shape of the core. In particular, it may be possible to shape the core in a way that the shape of the hollow in the component formed by the core follows an outer shape of the component in a substantially parallel manner. This way, a substantially constant wall thickness of the component may be realized even in regions of the body portion of the component into which the hollow extends. The substantially constant wall thickness of the component may especially be realized in a region of the curved section of the body portion. A substantially constant wall thickness sustains a capability of the component to bear substantial loads, i.e. forces and torques, between the first connection portion, the second connection portion and/or the wheel bearing interface while driving the vehicle. A portion of the walls delimiting the core body being flat facilitates manufacturing of the core since manufacturing flat portion of walls is comparatively easy. Moreover, the flat portion of the core body may as well be used to shape the hollow in a way that the shape of the hollow follows an outer shape of the component in a substantially parallel manner. As has been explained before, a substantially constant wall thickness may be realized in doing so.

According to a fourth aspect, there is provided a use of a core of the third aspect for manufacturing a component for a vehicle chassis of the first aspect. Using such a core, a component for a vehicle chassis comprising a hollow in a body portion of the component can be manufactured. This means that a body portion comprising a cavity may be manufactured. This has the effect that a weight of the component is reduced. Thus, an overall weight of the vehicle may be reduced. If the component forms part of an unsprung mass, the unsprung mass of the vehicle is reduced. This in turn enhances user comfort, e.g. in terms of vibrations and other types of harshness that the user experiences while driving the vehicle.

According to a fifth aspect, there is provided a method for manufacturing a component for a vehicle chassis. The method comprises:
- providing a core and a casting die,
- casting the component using the core and the casting die, and
- removing the core from the cast component in a straight retraction movement.

The casting die is a die of a shape that comprises a negative of an outer shape of the component for a vehicle chassis. The casting die may for example comprise a one-part sand die, a two-part solid die or a solid die comprising more than two parts. The core may be placed inside the casting die at a location at which a hollow inside the component for a vehicle chassis to be manufactured shall be created. Casting the component using the core and the casting die involves that molten metal, in particular molten aluminum or an alloy thereof, is poured into the closed casting die in which the core has been placed. After having the molten aluminum or the alloy thereof cooled down and solidified, the casting die is opened. This may imply breaking down the sand die or opening the two-part solid die or opening the solid die comprising more than two parts. The core can then be removed from the cast component in the straight retraction movement without having to break the core and/or the cast component. Thus, the core can be reused. Moreover, the hollow created inside the component for a vehicle chassis has the effect that a weight of the component is reduced. Thus, an overall weight of the vehicle is reduced. If the component forms part of an unsprung mass, the unsprung mass of the vehicle is reduced. This in turn enhances user comfort, e.g. in terms of vibrations or other types of harshness that the user experiences while driving the vehicle.

When executing the method according to the fifth aspect, the core may be a core according to the third aspect of the present disclosure.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle comprising a suspension system according to the present disclosure for a road wheel of the vehicle,
- Figure 2: shows a detailed view of the suspension system of the vehicle of Figure 1,
- Figure 3: shows a component according to the present disclosure for a vehicle chassis, wherein the component forms part of the suspension system of Figure 2, and a core according to the present disclosure for manufacturing the component for a vehicle chassis,
- Figure 4: shows a sectional view of the component for a vehicle chassis of Figure 3 along line A-A in Figure 3, and
- Figure 5: shows a sectional view of the core of Figure 3 along line B-B in Figure 3, and
- Figure 6: illustrates steps of the method according to the present disclosure for manufacturing a component for a vehicle chassis.

### DETAILED DESCRIPTION

The Figures are merely schematic representations and serve only to illustrate examples of the disclosure. Identical or equivalent elements are in principle provided with the same reference signs.

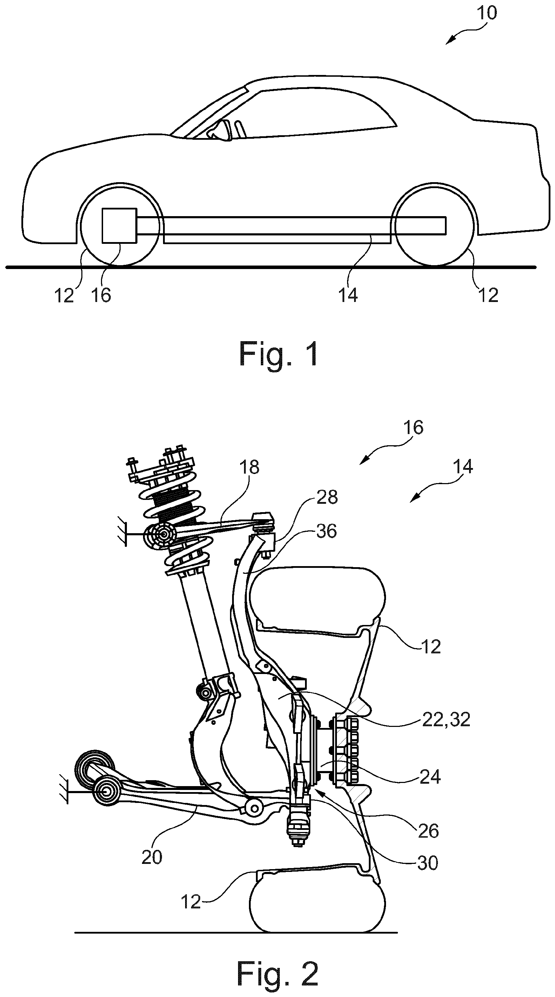

Figure 1 shows a vehicle 10.

The vehicle 10 comprises four road wheels 12, two front road wheels 12 and two rear road wheels 12. Only one of the two front road wheels 12 and one of the two rear road wheels 12 is shown.

The vehicle 10 further comprises a vehicle chassis 14 which is shown schematically in Figure 1.

Each of the four road wheels 12 is attached to the vehicle body via an associated suspension system 16. The suspensions systems 16 form part of the vehicle chassis 14.

In Figure 1, a suspension system 16 is only shown schematically and only at the front road wheel 14 of the vehicle 10.

Details of the suspension system 16 of the front road wheel 12 of the vehicle 10 of Figure 1 are shown in Figure 2.

The suspension system 16 comprises a first link arm 18 and a second link arm 20. The first link arm 18 and the second link arm 20.

The suspension system 16 further comprises a cast component 22 for the vehicle chassis 14. The cast component 22 may often be referred to as a knuckle.

Moreover, the suspension system 16 comprises a wheel bearing part 24. The wheel bearing part 24 is fixedly attached to a wheel bearing interface 26 of the cast component 22 for the vehicle chassis 14.

The front road wheel 12 of the vehicle 10 is fixedly attached to the wheel bearing part 24. Since the wheel bearing part 24 comprises a roller bearing, the front road wheel 12 is rotatably attached to the cast component 22 via the wheel bearing part 24.

The cast component 22 is pivotably attached to the vehicle body via the first link arm 18 and via the second link arm 20. In Figure 2, these connections to the vehicle body are shown schematically only.

The cast component 22 for the vehicle chassis 14 comprises a first connection portion 28. At the first connection portion 28, the cast component 22 is pivotably connected to the vehicle body via a rubber joint on the first link arm 18.

The cast component 22 for the vehicle chassis 14 also comprises a second connection portion 30. At the second connection portion 30, the cast component 22 is pivotably connected to the vehicle body via a rubber joint on the second link arm 20.

Moreover, the cast component 22 comprises a body portion 32. The body portion 32 is interposed between the first connection portion 28 and the second connection portion 30.

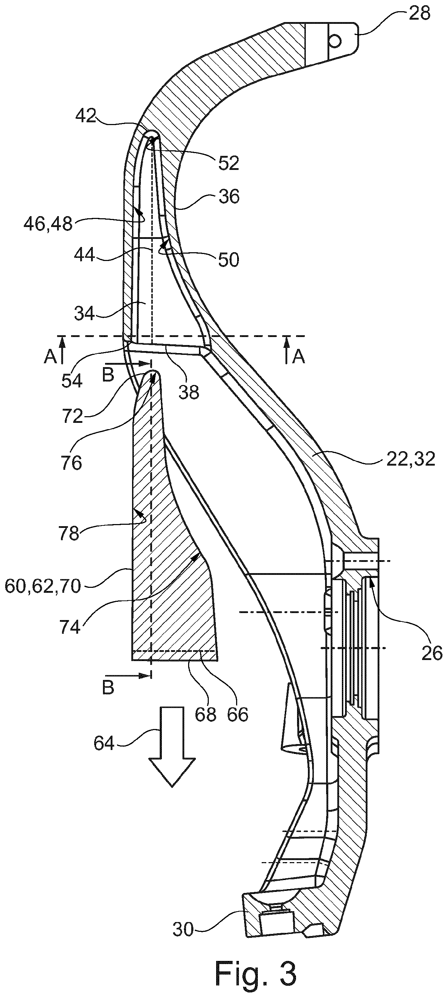

Details of the body portion 32 are shown in Figure 3.

The body portion 32 comprises the wheel bearing interface 26 to which the above-mentioned wheel bearing part 24 may be fixedly attached.

The body portion 32 further comprises a hollow 34. The hollow 34 is arranged between the first connection portion 28 and the second connection portion 30.

Moreover, the body portion 32 comprises a curved section 36. The curved section 36 extends on a portion between the wheel bearing interface 26 and the first connection portion 28.

In the following, the hollow 34 will be described in further detail.

The hollow 34 partially extends into the curved section 36 of the body portion 32 of the cast component 22.

The hollow 34 comprises a single opening 38 that is substantially oriented towards the wheel bearing interface 26 and the second connection portion 30.

Furthermore, it is observable that the hollow 34 narrows from the opening 38 towards a bottom 42 of the hollow 34. The bottom 42 of the hollow 34 may be understood as a tip region of the hollow 34.

A depth direction 44 of the hollow 34 extends from the opening 38 of the hollow 34 to the bottom 42 of the hollow 34. The depth direction 44 may also be referred to as a depth axis of the hollow.

The depth axis of the hollow is substantially parallel to a flat portion 48 of an inner wall 46 of the hollow 34 that is shown on a left side of the hollow 34 in Figure 3.

Furthermore, the hollow 34 is undercut-free. This means that if the depth axis is projected radially outwards onto the inner wall 46 of the hollow 34, any point on a projection line of the depth axis on the inner wall 46 of the hollow 34 that is closer to the bottom 42 of the hollow 34 than another point on the projection line is located at a distance from the depth axis that is smaller than or at least equal to a distance of the other point from the depth axis.

In simplified words, a width of a cross-section of the hollow 34, which is measured perpendicularly to the depth axis, narrows from the opening 38 of the hollow 34 towards the bottom 42 of the hollow 34 or at least remains constant over a portion of a depth of the hollow 34 along the depth direction 44.

Thus, in general, the hollow 34 is tapered from its opening 38 towards its bottom 42.

The inner walls 46 of the hollow 34 are arranged at a draft angle with respect to the depth axis. It is understood that the draft angle is not necessarily the same over all portions of the inner walls 46 of the hollow 34. In general, the draft angle is of a value between 0.5° and 15°. In the present example, the draft angle is of a value between 1° and 7°.

From the cross-section of the component 22 for the vehicle chassis 14 in Figure 3, and thus from the cross-section of the hollow 34 in Figure 3, it can be observed that the inner wall 46 of the hollow 34 comprises concave portions 52, convex portions 50, and flat portions 48.

A convex portion 50 is located on a right side of the hollow 34 at about half the depth of the hollow 34. This convex portion 50 allows the material that forms portions of the component 22 extending around the hollow 34 to form a substantially constant wall thickness of the component in a region of the convex portion 50 of the inner wall 46 of the hollow 34.

A concave portion 52 is for example located at the bottom 42 of the hollow 34. In other words, the bottom 42 of the hollow 34 comprises the concave portion 52. The concave portion 52 in this region of the inner wall 46 of the hollow 34 allows the hollow 34 to be of a generally tapered shape.

The flat portion 48 is located on the left side of the hollow 34 as shown in Figure 3. It extends from the opening 38 of the hollow 34 towards a region adjacent to the bottom 42 of the hollow 34.

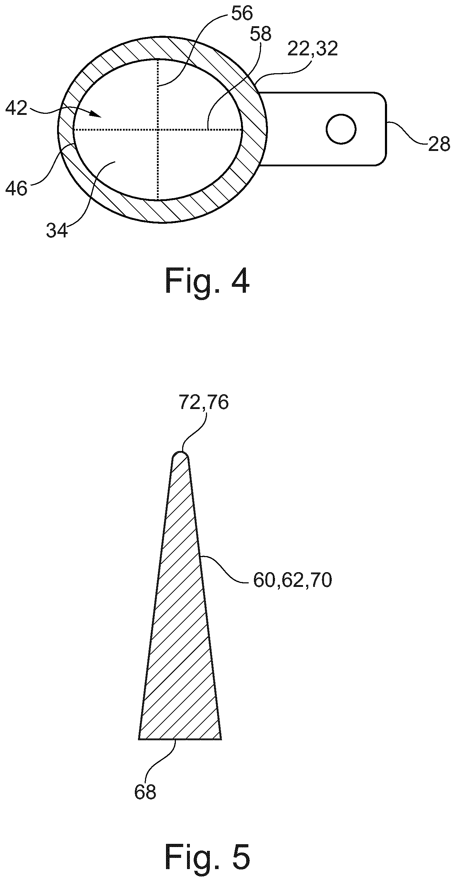

The depth extension of the hollow is larger than a largest diameter of the hollow 34. The largest diameter of the hollow 34 is shown in Figure 4, which illustrates a cross-section through the component 22 for the vehicle chassis 14 along a line A-A in Figure 3. The line A-A extends perpendicularly to the depth axis and cuts through an edge 54 that defines the opening 38 of the hollow 34.

From Figure 4, it can be seen that the hollow 34 is non-circular in the cross-section. In this particular example, the cross-section of the hollow 34 is of an elliptic shape. The elliptic shape is defined by a minor axis 56 and a major axis 58. The major axis 58 corresponds to the largest diameter of the hollow 34.

Alternatively, it is conceivable that the hollow 34 is circular in cross-section. In this alternative, the diameter of the circular cross-section corresponds to the largest diameter of the hollow 34.

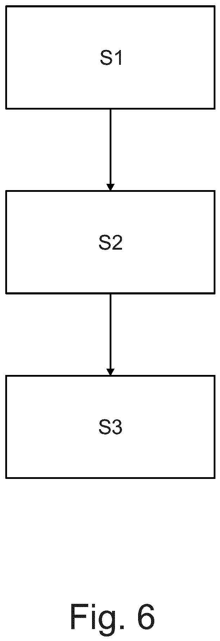

In the following, a method for manufacturing the component 22 for the vehicle chassis 14 will be explained. Steps of the method are illustrated in Figure 6.

In a first step S1, a casting die and a core 60 are provided.

In the present example, a two-part casting die made of steel is provided for manufacturing the component 22 for the vehicle chassis 14.

On its inner surface, the casting die is shaped as a negative of an outer shape of the component 22 for the vehicle chassis 14.

The core 60 is placed inside the casting die in a location at which the hollow 34 in the cast component 22 shall be manufactured.

The core 60 comprises a core body 62, which is also illustrated in Figure 3.

The core body 62 extends along a straight retraction direction 64. The retraction direction 64 is indicated by an arrow in Figure 3. A height of the core body 62 measured along the retraction direction 64 is longer than the depth of the hollow 34 of the cast component 22 to be manufactured. Thus, a portion of the core body 62 sticks out from the hollow 34 such that it can be gripped for retracting the core body 62.

The height of the core body 62 along the retraction direction 64 is larger than a full width 66 of the core body 62. The full width 66 of the core body 62 substantially corresponds to the largest diameter of the hollow 34 as shown in the cross-section in Figure 4. The full width 66 of the core body 62 is present at a first end 68 of the core body 62.

The height of the core body 62 extending along the retraction direction 64 may also be referred to as extension axis.

As the hollow 34 of the cast component 22, the core 60 is undercut-free. This means that if the extension axis is projected radially outwards onto an outer surface 70 of the core body 62, any point on a projection line of the extension axis on the outer surface 70 of the core body 62 that is closer to a second end 72 of the core body 62 than another point on the projection line is located at a distance from the extension axis that is smaller than or at least equal to a distance of the other point from the extension axis. The second end 72 of the core body 62 is substantially opposite the first end 68 of the core body 62 at a furthest distance from the first end 68.

In simplified terms, a width 66 of a cross-section of the core body 62 that is perpendicular to the extension axis narrows from the first end 68 of the core body 62 towards the second end 72 of the core body 62 or at least remains constant over a portion of a length of the core body 62 along the retraction direction 64.

Thus, in general, the core body 62 is tapered from the first end 68 towards the second end 72.

The outer surface 70 of the core body 62 is arranged at a draft angle with respect to the extension axis. It is understood that the draft angle is not necessarily the same over all portions of the outer surface 70 of the core body 62. In general, the draft angle is of a value between 0.5° and 15°. In the present example, the draft angle is of a value between 1° and 7°.

From the illustration of the core 60 in Figure 3, it can be observed that the outer surface 70 of the core body 62 comprises concave portions 74, convex portions 76, and flat portions 78.

A concave portion 74 is located on a right side of the core body 62 at about half the height of the core 60. During casting, this concave portion 74 allows the material that forms portions of the component 22 extending around the hollow 34 to form a substantially constant wall thickness of the component 22 in the region of the concave portion 74 of the outer surface 70 of the core body 62.

A convex portion 76 is for example located at the second end 72 of the core body 62. In other words, the second end 72 of the core body 62 comprises the convex portion 76. The convex portion 76 in this region of the outer surface 70 of the core body 62 allows the core body 62 to be of a generally tapered shape.

The flat portion 78 is located on a left side of the core body 62 as shown in Figure 3. It extends from the first end 68 of the core body 62 towards a region adjacent to the second end 72 of the core body 62.

Figure 5 shows a section through the core body 62 along a line B-B that corresponds to the extension axis.

From this section, the tapered shape of the core body 62 can again be seen. However, in this section, core body 62 does not comprise any concave portion. Thus, it becomes clear that the core body 62 may comprise a complex three-dimensional shape having concave portions 74 and convex portions 76 distributed over the outer surface 70 of the core body 62.

Coming back to the method, in a second step S2, the two-part casting die is closed, having the core 60 placed inside the casting die. Thereupon, molten aluminum is poured into the casting die.

After the aluminum in the casting die has solidified, the two-part casting die is opened and the cast component 22 is removed from the casting die in a third step S3 of the method. Subsequently, the core 60 is removed from the cast component 22 along the straight retraction direction 64 in a straight retraction movement as indicated by the arrow in Figure 3.

Thus, using the core 60 as described above for manufacturing the cast component 22 for the vehicle chassis 14, a hollow 34 in the cast component 22 is created.

The hollow 34 in the cast component 22 reduces an overall mass of the cast component 22. Since, in the present example, the cast component 22 is a knuckle for a front road wheel 12 of the vehicle 10, an unsprung mass of the vehicle 10 is reduced. As a consequence, comfort for the user of the vehicle 10 while driving the vehicle 10 is enhanced. In particular, vibrations and other types of harshness that the user experiences while driving the vehicle 10 is reduced.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: road wheel
- 14: vehicle chassis
- 16: suspension system
- 18: first link arm
- 20: second link arm
- 22: component
- 24: wheel bearing part
- 26: wheel bearing interface
- 28: first connection portion
- 30: second connection portion
- 32: body portion
- 34: hollow
- 36: curved section
- 38: opening of hollow
- 42: bottom of hollow
- 44: depth direction
- 46: inner wall of hollow
- 48: flat inner wall portion of hollow
- 50: convex inner wall portion of hollow
- 52: concave inner wall portion of hollow
- 54: edge of hollow
- 56: minor axis
- 58: major axis
- 60: core
- 62: core body
- 64: retraction direction
- 66: width of core body
- 68: first end of core body
- 70: outer surface of core body
- 72: second end of core body
- 74: concave portion of core body
- 76: convex portion of core body
- 78: flat portion of core body

## Claims

1. A component (22) for a vehicle chassis (14), the component (22) comprising:
- a first connection portion (28) pivotably attachable to a vehicle structure or another chassis component,
- a second connection portion (30) pivotably attachable to a vehicle structure or another chassis component, and
- a body portion (32) structurally interconnecting the first connection portion (28) and the second connection portion (30), wherein a wheel bearing interface (26) for connecting a wheel bearing part (24) is provided on the body portion (32),
wherein the body portion (32) comprises a hollow (34) having a depth extension larger than a largest diameter of the hollow (34) and being undercut-free along a straight direction extending in parallel to the depth extension.

2. The component (22) according to claim 1, wherein the body portion (32) comprises a curved section (36), wherein the hollow (34) at least partially extends into the curved section (36).

3. The component (22) according to claim 1 or 2, wherein the hollow (34) is narrowing along the depth extension towards a bottom (42) of the hollow (34).

4. The component (22) according to any one of the preceding claims, wherein at least a portion of the walls delimiting the hollow is inclined by 0.5° to 15° with respect to the depth extension.

5. The component (22) according to any one of the preceding claims, wherein at least a portion of the walls delimiting the hollow is at least one of convex, concave and flat.

6. The component (22) according to any one of the preceding claims, wherein the hollow (34) is accessible via a singular opening (38) only.

7. The component (22) according to claim 6, wherein the singular opening (38) is oriented towards the wheel bearing interface (26) and/or towards the second connection portion (30).

8. The component (22) according to any one of the preceding claims, wherein the hollow (34) is arranged between the first connection portion (28) and the wheel bearing interface (26).

9. A suspension system (16) for a road wheel (12) of a vehicle (10), the suspension system (16) comprising:
- the component (22) according to any of the preceding claims,
- a first link arm (18) pivotably connected to the first connection portion (28) of the component (22),
- a second link arm (20) pivotably connected to the second connection portion (30) of the component (20), and
- a wheel bearing part (24) connected to the wheel bearing interface (26).

10. A core (60) for manufacturing a component (22) for a vehicle chassis (14) according to claims 1 to 8, wherein the core (60) comprises a core body (62) extending along a straight retraction direction (64), wherein the extension of the core body (62) along the retraction direction (64) is larger than a width (66) of the core body (62) measured perpendicularly to the retraction direction (64), and wherein the core body (62) is undercut-free along the retraction direction (64).

11. The core (60) according to claim 10, wherein the core body (62) is narrowing along the retraction direction (64).

12. The core (60) according to claim 10 or 11, wherein at least a portion of the walls delimiting the core body (62) is inclined by 0.5° to 15° with respect to the retraction direction (64).

13. The core (60) according to any one of claims 10 to 12, wherein at least a portion of the walls delimiting the core body (62) is at least one of convex, concave and flat.

14. A use of a core (60) of any one of claims 10 to 13 for manufacturing a component (22) for a vehicle chassis (14) of any one of claims 1 to 8.

15. A method for manufacturing a component (22) for a vehicle chassis (14), the method comprising:
- providing a core (60) and a casting die,
- casting the component (22) using the core (60) and the casting die, and
- removing the core (60) from the cast component (22) in a straight retraction movement.
